# EUROPEAN PATENT APPLICATION

(11) **EP 4 817 815 A1**
(43) Date of publication of application: **07.10.2026**
(21) Application number: 23960133.9
(22) Date of filing: 29.11.2023
(51) Int. Cl.: B25J 13/00, B25J 9/06, H02P 5/46

(54) **CONTROL DEVICE, CONTROL SYSTEM, AND CONTROL METHOD**

(71) Applicant: KAWASAKI JUKOGYO KABUSHIKI KAISHA, Kobe-shi, Hyogo 650-8670 (JP)
(72) Inventor: IRIE, Kyo, 650-8670 Kobe-shi (JP); SUEMOTO, Hiroki, 650-8670 Kobe-shi (JP)
(74) Representative: Bals & Vogel Patentanwälte PartGmbB
(86) International application number: PCT/JP2023/042675
(87) International publication number: WO 2025/115112

(57) **Abstract**

A control device includes a controller that synchronizes operations of actuators operable in different control cycles. The controller generates, for each of the actuators, reference command values as an actuator trajectory of the actuator. The reference command values are information indicating position command values each for a predetermined reference cycle commonly used by the actuators. The controller determines transmission command values using the reference command values. The transmission command values are position command values each for a control cycle of the actuator. The controller transmits the determined transmission command values to the actuator. When the control cycle of the actuator is different from the reference cycle, the controller excludes reference command values not corresponding to the control cycle and determines reference command values corresponding to the control cycle as the transmission command values.

## Description

### TECHNICAL FIELD

The present disclosure relates to a control device, a control system, and a control method that control actuators.

### BACKGROUND

A known control device controls actuators. For example, Japanese Unexamined Patent Application Publication No. 2004-280195 describes a robot control device including actuators, a detector that detects, for example, the positions or speeds of the actuators, a subcontroller that controls the actuators based on the values detected by the detector, and a main controller that generates command values for each actuator. The main controller includes a control unit that changes the order of transmitting command values to the subcontroller to control the update cycle of the command values. This control device changes the command value update cycle based on the speed and accuracy appropriate for the actuators to intensively distribute network resources. The control device intends to achieve high speed and accuracy for the minimal axes in the system including the actuators.

### SUMMARY OF INVENTION

### TECHNICAL PROBLEM

Actuators included in, for example, a robot with a robotic arm and a hand may operate in different control cycles. In this case, a technique is awaited for reducing deviations in operation timing among the actuators for cooperative operation of the actuators.

### SOLUTION TO PROBLEM

In response to at least part of the above issue, the present disclosure can be implemented in the aspects described below.

A control device according to a first aspect of the present disclosure controls actuators operable in different control cycles. The control device includes a controller that synchronizes operations of the actuators. The controller generates, for each of the actuators, reference command values as an actuator trajectory of the actuator. The reference command values are information indicating position command values each for a reference cycle commonly used by the actuators. The controller determines, for each of the actuators, transmission command values using the reference command values. The transmission command values are position command values each for a control cycle of the actuator. The controller transmits the determined transmission command values to the actuator. When the control cycle of the actuator is different from the reference cycle, the controller excludes, among the reference command values, reference command values not corresponding to the control cycle and determines, among the reference command values, reference command values corresponding to the control cycle as the transmission command values.

A control system according to a second aspect of the present disclosure includes actuators operable in different control cycles and a control device that controls operations of the actuators. The control device includes a controller that synchronizes the operations of the actuators. The controller generates, for each of the actuators, reference command values as an actuator trajectory of the actuator. The reference command values are information indicating position command values each for a predetermined reference cycle used commonly by the actuators. The controller determines, for each of the actuators, transmission command values using the reference command values. The transmission command values are position command values each for the control cycle of the actuator. The controller transmits the determined transmission command values to the actuator. When the control cycle of the actuator is different from the reference cycle, the controller excludes, among the reference command values, reference command values not corresponding to the control cycle and determines, among the reference command values, reference command values corresponding to the control cycle as the transmission command values.

A control method according to a third aspect of the present disclosure is a control method for synchronizing operations of actuators operable in different control cycles. The method includes generating, for each of the actuators, reference command values as an actuator trajectory of the actuator. The reference command values are information indicating position command values each for a predetermined reference cycle used commonly by the actuators. The method includes determining, for each of the actuators, transmission command values using the reference command values. The transmission command values are position command values each for the control cycle of the actuator. The method includes transmitting, for each of the actuators, the determined transmission command values to the actuator. When the control cycle of the actuator is different from the reference cycle, the determining the transmission command values includes excluding, among the reference command values, reference command values not corresponding to the control cycle and determining, among the reference command values, reference command values corresponding to the control cycle as the transmission command values.

### BRIEF DESCRIPTION OF DRAWINGS

FIG. 1 is a schematic diagram of a hand control system.
FIG. 2 is a block diagram of the control system.
FIG. 3 is a flowchart of synchronous control.
FIG. 4 is a flowchart of trajectory generation.
FIG. 5 is a flowchart of transmission command value determination.
FIG. 6 is a conceptual diagram of transmission command values Cs generated in step S240.
FIG. 7 is a conceptual diagram of transmission command values Cs generated in step S250.
FIG. 8 is a flowchart of transmission command value determination in a second embodiment.
FIG. 9 is a conceptual diagram of transmission command values Cs generated in step S280.
FIG. 10 is a flowchart of transmission command value determination in a third embodiment.
FIG. 11 is a flowchart of the transmission command value determination in the third embodiment.
FIG. 12 is a conceptual diagram of emergency command values Ce generated in step S304.
FIG. 13 is a graph showing the relationship between time and progress.
FIG. 14 is a block diagram of a control system according to another embodiment.

### DETAILED DESCRIPTION OF THE EMBODIMENTS

### First Embodiment

### System Configuration

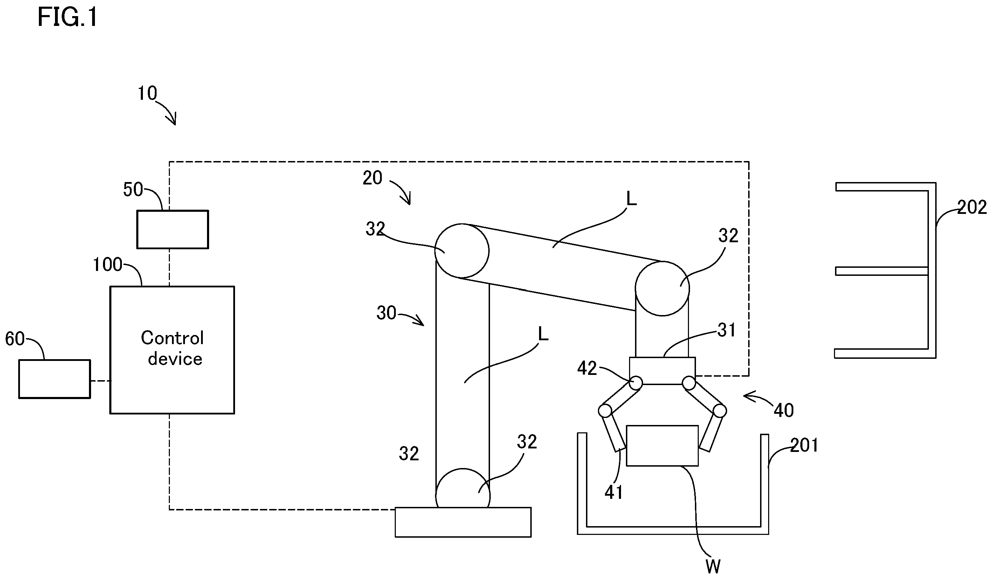

FIG. 1 is a diagram of an example of a control system 10 according to a first embodiment. The control system 10 allows cooperative operation of actuators that operate in different control cycles. An actuator is a machine or a mechanical element that converts electrical signals output by a computer into physical motions.

The control system 10 according to the present embodiment includes a robot 20 including a robotic arm 30 and a hand 40, an amplifier 50 that transmits and receives electric signals to and from the hand 40, an input device 60, and a control device 100. In FIG. 1, the structures of the robotic arm 30 and the hand 40 are simplified. As shown in FIG. 1, the robot 20 has a work area including a container 201 and a container 202. The control system 10 causes the robot 20 to perform a pick-and-place operation, in which the robot 20 grasps and moves a workpiece W in the container 201 to the container 202.

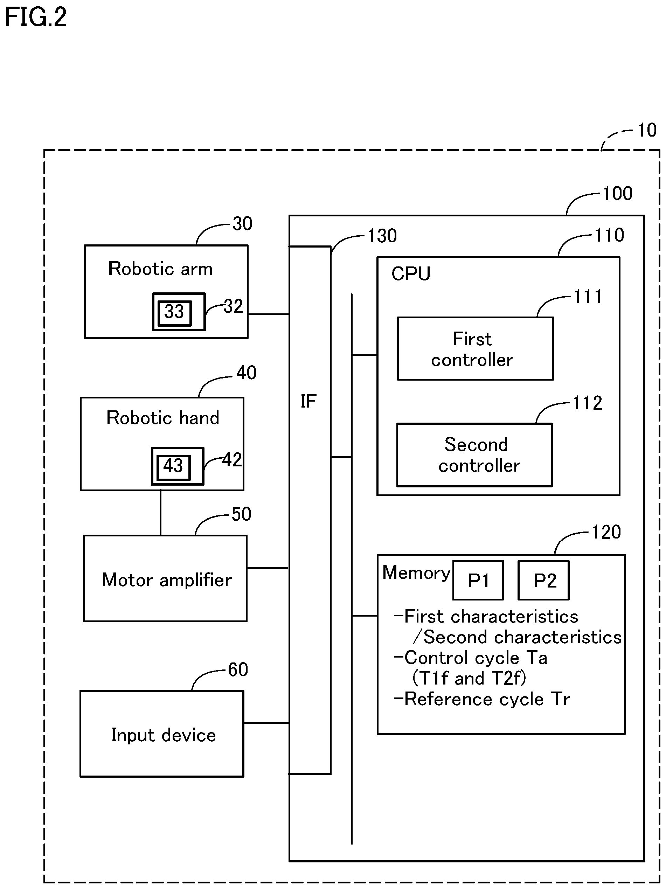

The robotic arm 30 includes first actuators 32 and links L. Two adjacent first actuators 32 are connected with a link L. The first actuators 32 are also referred to as joints or movement axes. Each of the first actuators 32 includes known components for operating the robotic arm 30 such as a servomotor (hereafter, a first motor 33, refer to FIG. 2), an encoder, and a reducer. The first actuators 32 are driven by output from the control device 100. The robotic arm 30 in the present embodiment is a vertical articulated robot with six degrees of freedom.

The hand 40 is attached to an arm end 31 of the robotic arm 30. The arm end 31 is also a receiver to which the hand 40 can be detachably attached. The hand 40 is also referred to as a robotic hand, an end effector, or a tool. The hand 40 includes second actuators 42 as movement axes of the hand 40. FIG. 1 illustrates one of the second actuators 42. Each of the second actuators 42 includes known components for operating the hand 40 such as a servomotor (hereafter, a second motor 43, refer to FIG. 2), an encoder, and a reducer. The hand 40 is driven by output from the amplifier 50 that receives commands from the control device 100. The hand 40 can grasp and release a target workpiece W. The robot 20 can thus grasp and move the workpiece W. The hand 40 at the arm end 31 can be changed based on use. A user can thus cause the robot 20 to perform intended operations.

In the present embodiment, the first actuators 32 in the robotic arm 30 have the same characteristics. Similarly, the second actuators 42 in the hand 40 have the same characteristics. The first actuators 32 and the second actuators 42 have different characteristics. The characteristics of the first actuators 32 are referred to as first characteristics, and the characteristics of the second actuators 42 are referred to as second characteristics. The first characteristics and the second characteristics each include restriction information indicating upper limits of speed, acceleration, and deceleration. The restrictions in the first characteristics and the second characteristics are predetermined based on the specifications of the motors, such as the current characteristics and the torque characteristics of the first motor 33 and the second motor 43. The restrictions may be predetermined based on the structures, the singular postures, and the movable ranges of the robotic arm 30 and the hand 40, in addition to the specifications of the motors.

In the present embodiment, the control device 100 drives the first actuators 32 in a predetermined control cycle. In other words, the first actuators 32 operate in the same control cycle. Thus, the entire robotic arm 30 can serve as a single actuator. The control cycle of the robotic arm 30 is basically a first cycle T1f that is initially set in the control device 100. The control cycle of the robotic arm 30 may be varied from the first cycle T1f based on, for example, the state of the control device 100.

The amplifier 50 drives the second actuators 42 in the hand 40 based on command values transmitted from the control device 100. The amplifier 50 is also referred to as a servo amplifier or a servo controller. The amplifier 50 controls the second actuators 42 in a predetermined control cycle. In other words, the second actuators 42 operate in the same control cycle. Thus, the entire hand 40 can serve as a single actuator. The control cycle of the amplifier 50 is basically a second cycle T2f that is set initially. The control cycle of the amplifier 50 may be varied from the second cycle T2f based on, for example, the state of the amplifier 50. The second cycle T2f is different from the first cycle T1f of the robotic arm 30.

The user can input various instructions into the control system 10 through the input device 60. The instructions include a start instruction and an emergency stop instruction for synchronous control (described later). The input device 60 can be, for example, any of various input terminals such as a touchscreen or a button.

The control device 100 is a robot controller that comprehensively controls the movement of the robot 20. The control device 100 generates a trajectory for moving an end 41 of the hand 40 from a start position to a target position and causes the robot 20 to reproduce (replay) the generated trajectory. The control device 100 also performs the synchronous control to reduce deviations in synchronization that are deviations in operation timing among the actuators 32 and 42. The control device 100 will now be described in detail.

As shown in FIG. 2, the control device 100 includes a central processing unit (CPU) 110, which is a processor, a memory 120, and an interface circuit 130. The control device 100 is connected to and communicates with the robotic arm 30, the amplifier 50, the input device 60, and peripheral devices (not shown) through the interface circuit 130. These communications can be wireless communications or wired communications using known communication schemes. The control device 100 can also output power to the robotic arm 30 through the interface circuit 130. As described above, the robotic arm 30 includes the first actuators 32, and the hand 40 includes the second actuators 42. However, FIG. 2 illustrates one of the first actuators 32 with the first motor 33 and one of the second actuators 42 with the second motor 43.

The memory 120 includes a volatile memory and a nonvolatile memory. The memory 120 stores programs P1 and P2 as well as various sets of information. In the present embodiment, the memory 120 stores the first characteristics and the second characteristics, the first cycle T1f and the second cycle T2f, and a reference cycle Tr (described later).

The CPU 110 expands and executes the program P1 stored in the memory 120 to function as a first controller 111. The first controller 111 performs the synchronous control to reduce deviations in synchronization among the actuators 32 and 42 in the robot 20, allowing cooperative operation of the actuators 32 and 42. Deviations in synchronization include, for example, deviations in operation start timing, operation stop timing, acceleration start timing, and deceleration start timing among the actuators. Although described in detail later, the first controller 111 generates position command values for each actuator to synchronously control the actuators 32 and 42 in the synchronous control. The first controller 111 performs at least part of the function of a controller in an aspect of the present disclosure.

A second controller 112 controls the robotic arm 30 using the command values generated by the first controller 111. In the present embodiment, the second controller 112 provides output to the first actuators 32 in the robotic arm 30 through the interface circuit 130 to control the robotic arm 30. The second controller 112 is also referred to as a servo controller for the robotic arm 30. The second controller 112 basically drives the first actuators 32 in the first cycle T1f that is set initially.

### Synchronous control

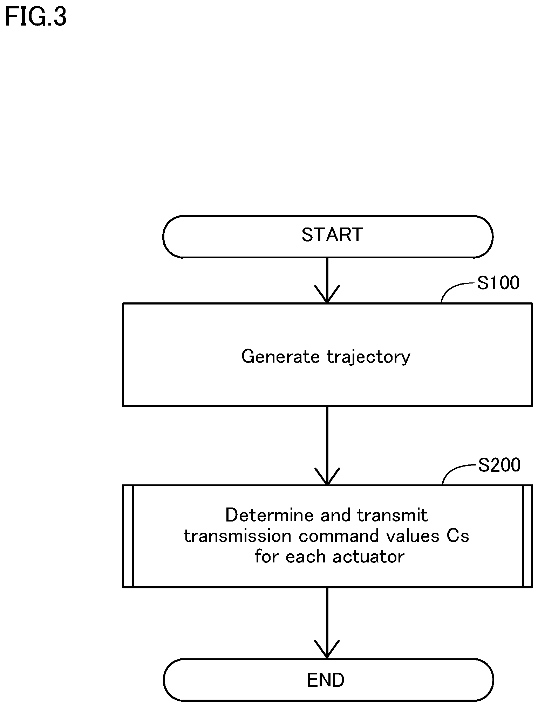

FIG. 3 is a flowchart of the synchronous control performed by the control device 100. For example, the synchronous control starts in response to the start instruction input into the control device 100 through the input device 60.

The first controller 111 performs trajectory generation in step S100. In step S100, the first controller 111 obtains the first characteristics and the second characteristics stored in the memory 120 to generate a trajectory based on the restrictions (characteristics) of each actuator. More specifically, the first controller 111 generates a trajectory that can be reproduced by an actuator with the strictest restrictions. For example, the first controller 111 applies the upper limits of an actuator with the lowest upper limits of acceleration, deceleration, and speed to other actuators to generate actuator trajectories.

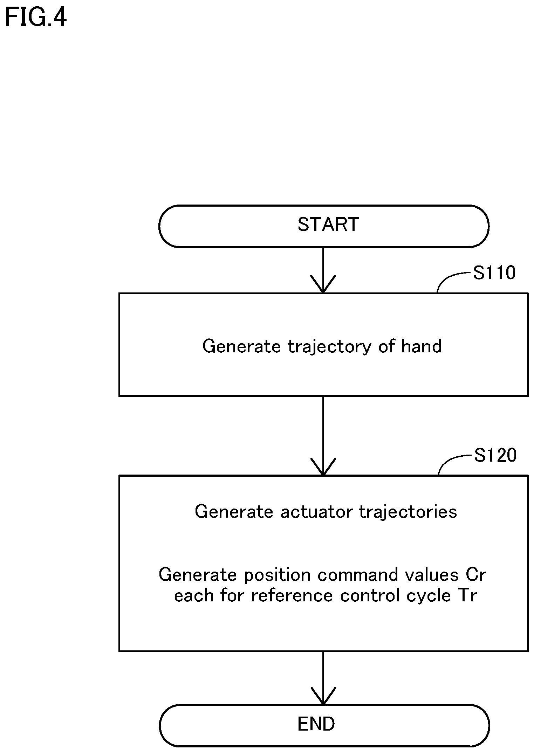

FIG. 4 is a flowchart of specific trajectory generation. In step S110, the first controller 111 generates a trajectory of the hand 40 for causing the end 41 of the hand 40 to move from the start position to the target position without colliding with an obstacle. The trajectory describes the position and orientation of the hand 40 in a space using the time as a parameter. The positional information of the initial position, the target position, and the obstacle may be pre-registered in the memory 120, or may be obtained by the first controller 111 through an imaging device (not shown).

The first controller 111 then generates, in step S120, actuator trajectories that are trajectories of the actuators (the drive state or the operation state) for causing each actuator to reproduce the position and the orientation of the hand 40 on the generated trajectory. Each actuator may have a different actuator trajectory. In step S120, the first controller 111 generates, for each actuator, position command values each for a reference cycle Tr. The reference cycle Tr is a control cycle commonly used by the actuators 32 and 42 in the robot 20. The reference cycle Tr is predetermined through experiments or simulations and stored in the memory 120. The position command values each for the reference cycle Tr are also referred to as reference command values Cr. The reference command values Cr are position command values that are to be the basis of transmission command values Cs transmitted to each actuator. Each actuator trajectory is information indicating the position command values each for the reference cycle Tr.

After generating the actuator trajectories, the first controller 111 advances the synchronous control to step S200 in FIG. 3. In step S200, the first controller 111 determines the transmission command values Cs for each actuator using the reference command values Cr, and transmits the determined transmission command values Cs to each actuator.

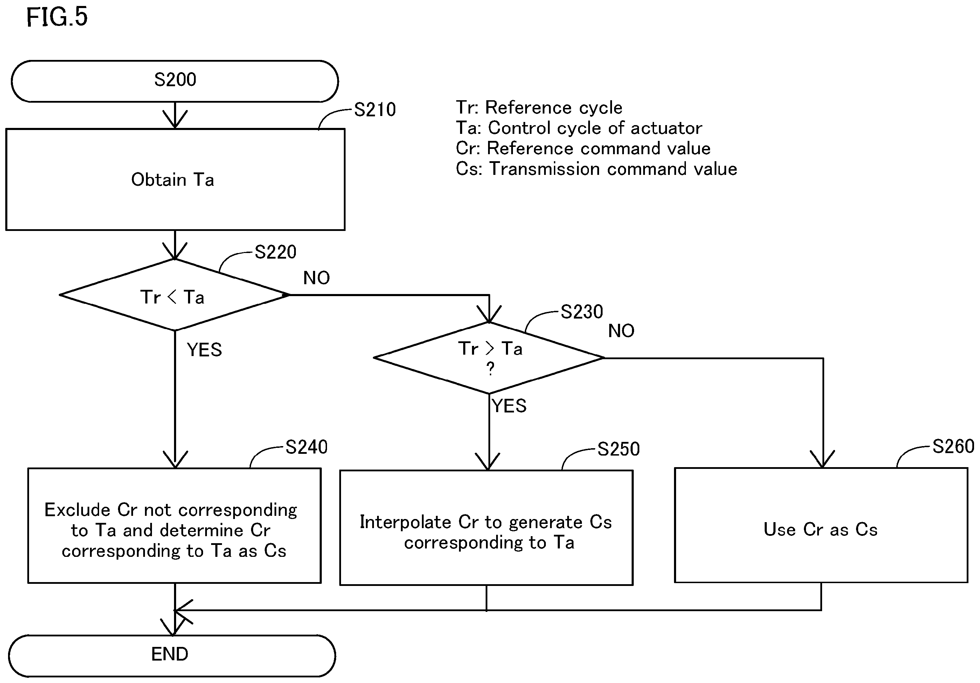

FIG. 5 is a flowchart of transmission command value determination. The transmission command value determination is performed for each actuator.

In step S210, the first controller 111 obtains a control cycle Ta of a target actuator. In the present embodiment, the first controller 111 refers to the memory 120 and obtains the first cycle T1f or the second cycle T2f as appropriate for the target actuator.

In step S220, the first controller 111 determines whether the control cycle Ta of the target actuator is greater (longer) than the reference cycle Tr used to generate the actuator trajectory. When the control cycle Ta is greater than the reference cycle Tr (Yes in step S220), the first controller 111 advances the processing to step S240. The first controller 111 deletes reference command values Cr each for the reference cycle Tr on the actuator trajectory to cause the reference command values Cr to correspond to the control cycle Ta and generates (determines) the position command values (transmission command values Cs) to be transmitted to the target actuator. In other words, the first controller 111 excludes, among the reference command values Cr generated in step S120 in FIG. 4, reference command values Cr not corresponding to the control cycle Ta, and determines reference command values Cr corresponding to the control cycle Ta as the transmission command values Cs. The processing in step S240 is also a process for reducing the reference command values on the actuator trajectory.

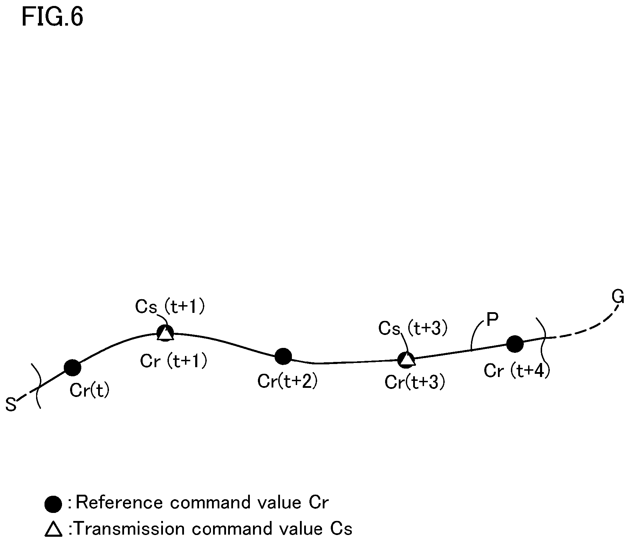

FIG. 6 is a conceptual diagram of the transmission command values Cs generated in step S240. FIG. 6 schematically shows, with a solid line P, part of an actuator trajectory from a start position S to a target position G. The reference command values Cr and the transmission command values Cs are indicated on the solid line P. The reference command values Cr and the transmission command values Cs are position command values with time data. The time data included in the command values Cr and Cs is indicated in parentheses (t, t + 1, t + 2, ...). The same applies to the figures referred to below. In the example shown in FIG. 6, the control cycle Ta of the corresponding actuator is twice the reference cycle Tr. When the reference cycle Tr is 1 millisecond (ms), the control cycle Ta is 2 ms, for example. With the control cycle Ta greater than the reference cycle Tr (Yes in step S220 in FIG. 5), the first controller 111 excludes reference command values Cr not matching the control cycle Ta, and determines reference command values Cr corresponding to the control cycle Ta as the transmission command values Cs (step S240 in FIG. 5). In the example shown in FIG. 6, the reference command values Cr(t), Cr(t + 2), and Cr(t + 4) do not match the control cycle Ta, and the reference command values Cr(t + 1) and Cr(t + 3) match the control cycle Ta, among the reference command values Cr(t), Cr(t + 1), Cr(t + 2), Cr(t + 3), and Cr(t + 4). The first controller 111 thus skips the reference command values Cr(t), Cr(t + 2), and Cr(t + 4), and determines the reference command values Cr(t + 1) and Cr(t + 3) as the transmission command values Cs.

Referring back to step S220 in FIG. 5, when the determination result in step S220 is negative, or in other words, when the control cycle Ta is less than or equal to the reference cycle Tr, the first controller 111 advances the processing to step S230 and determines whether the control cycle Ta is less (shorter) than the reference cycle Tr. In step S230, the determination result is negative when the reference cycle Tr is equal to the control cycle Ta. When the reference cycle Tr and the control cycle Ta are equal (No in step S230), the first controller 111 advances the processing to step S260 and directly uses the reference command values Cr as the transmission command values Cs.

When the reference cycle Tr is less than the control cycle Ta (Yes in step S230), the first controller 111 advances the processing to step S250 and interpolates between two consecutive reference command values Cr to generate transmission command values Cs corresponding to the control cycle Ta on the actuator trajectory. In the present embodiment, interpolation is linear interpolation. In other embodiments, interpolation may be quadratic interpolation or cubic interpolation. The same applies to the interpolation referred to in the embodiments described below. The processing in step S250 is also a process for interpolating, on the actuator trajectory, the position command values at the times corresponding to the control cycle Ta using the reference command values Cr with time data immediately before and after the time corresponding to the control cycle Ta.

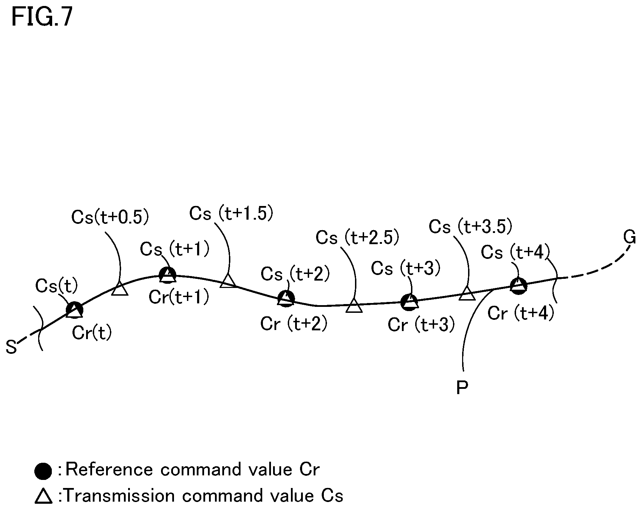

FIG. 7 is a conceptual diagram of the transmission command values Cs generated in step S250. As in FIG. 6, FIG. 7 shows part of an actuator trajectory (the solid line P) from a start position S to a target position G, the reference command values Cr, and the transmission command values Cs. In the example shown in FIG. 7, the control cycle Ta of the corresponding actuator is one-half of the reference cycle Tr. When the reference cycle Tr is 1 ms, the control cycle Ta is 0.5 ms, for example. When the control cycle Ta is less than the reference cycle Tr (Yes in step S230 in FIG. 5), the first controller 111 interpolates, using consecutive reference command values among the reference command values Cr each for the reference cycle Tr, the position command values between the two consecutive reference command values to generate transmission command values Cs (step S250). In the example shown in FIG. 7, two consecutive reference command values Cr(t) and Cr(t + 1) among the reference command values Cr(t), Cr(t + 1), Cr(t + 2), Cr(t + 3), and Cr(t + 4) are used to generate a command value (transmission command value) Cs(t + 0.5) between the two reference command values Cr(t) and Cr(t + 1). The command value Cs(t + 0.5) is also an interpolated command value. As described above, the first controller 111 interpolates, using the consecutive reference command values Cr, the position command values Cs at the times corresponding to the control cycle Ta and at which no reference command values Cr are generated and thus generates the transmission command values Cs(t), Cs(t + 0.5), and Cs(t + 1).

After determining (generating) the transmission command values Cs for all the actuators, the first controller 111 transmits the determined transmission command values Cs to the respective actuators. In the present embodiment, the first controller 111 transmits the transmission command values Cs to the first actuators 32 through the second controller 112. The second controller 112 converts digital signals indicating the transmission command values Cs determined by the first controller 111 to current values, and outputs the current values to the first actuators 32. The first controller 111 transmits the transmission command values Cs to the second actuators 42 through the amplifier 50. The first controller 111 transmits the digital signals indicating the transmission command values Cs for the second actuators 42 to the amplifier 50. The amplifier 50 then converts the digital signals to current values and outputs the current values to the second actuators 42. The synchronous control is performed as described above.

In the first embodiment described above, the first controller 111 obtains the first characteristics and the second characteristics including restrictions on the actuators, such as speed, acceleration, or deceleration, and generates actuator trajectories that can be reproduced by the actuator with the strictest restrictions. Each actuator trajectory is information indicating the reference command values Cr that are position command values each for the reference cycle Tr. The reference cycle Tr is common to all the actuators. The first controller 111 uses the reference command values Cr to determine the transmission command values Cs that are position command values each for the control cycle Ta of the corresponding actuator. The structure according to the present embodiment can thus maintain the control cycles Ta of the actuators more appropriately than the structure in which the transmission command values for each actuator are generated based on the greatest (longest) control cycle Ta among the control cycles Ta of the actuators. Thus, the operation accuracy of the actuators is less likely to be reduced. This synchronizes operations of the actuators while causing an actuator with a short control cycle Ta to perform an operation in a narrow space such as within the container 202 in FIG. 1. This also allows the actuators to be synchronously controlled independently of the control cycles Ta, improving the degrees of freedom of the actuators used in the robot 20.

When the control cycle Ta of an actuator is greater than the reference cycle Tr, the first controller 111 excludes reference command values Cr not corresponding to the control cycle Ta, and determines reference command values Cr corresponding to the control cycle Ta as the transmission command values Cs. When the control cycle Ta is less than the reference cycle Tr, the first controller 111 interpolates, using two consecutive reference command values Cr, a position command value between the two reference command values Cr to generate transmission command values Cs corresponding to the control cycle Ta. In this manner, the same reference cycle Tr is used by the actuators 32 and 42 with different control cycles Ta, and the transmission command values Cs are generated based on the reference command values Cr each for the reference cycle Tr. This reduces deviations in synchronization among the actuators.

### Second Embodiment

In step S200 in the transmission command value determination (FIG. 5) described in the first embodiment, the first controller 111 obtains, as the control cycles Ta of the actuators, the first cycle T1f and the second cycle T2f that are set initially. The control cycle Ta can be varied. The control cycle Ta can be varied in response to variations in transmission and reception of signals in the control device 100. In this case as well, the control device 100 can synchronize the operations of the actuators based on the varied control cycle Ta. In the second embodiment, the synchronous control performed when the control cycle Ta is varied will be described.

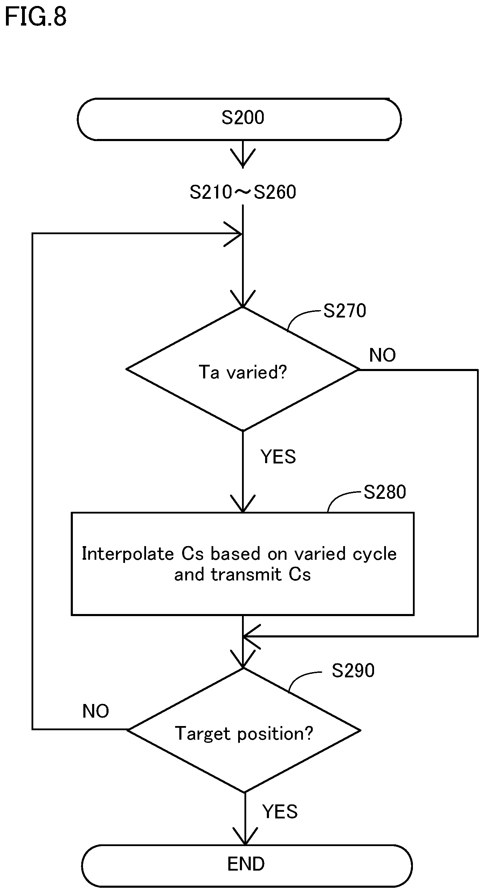

FIG. 8 is a flowchart of the transmission command value determination performed when the control cycle is varied. The first controller 111 further determines, while transmitting the transmission command values Cs in steps S210 to S260 in the transmission command value determination shown in FIG. 5, whether the control cycle Ta of the target actuator is varied (step S270 in FIG. 8). In the present embodiment, the first controller 111 sequentially obtains, from the actuators 32 and 42 or from a device associated with the actuators 32 and 42, first signals corresponding to reception of the transmission command values Cs at the actuators 32 and 42. The first signals are signals for requesting, for example, the first controller 111 to transmit the subsequent transmission command value Cs after the second controller 112 (servo controller) provides output corresponding to the transmission command values Cs to the first actuators 32. The first signals are signals for requesting, for example, the first controller 111 to transmit the subsequent transmission command value Cs after the amplifier 50 provides output to the second actuator 42. The first controller 111 determines whether the control cycle Ta of the target actuator is varied based on the interval at which the first signals are obtained. When the control cycle Ta is not varied (No in step S270), the first controller 111 continues to transmit the transmission command values Cs determined in steps S240 to S260 in FIG. 5 to the actuators 32 and 42.

When the control cycle Ta is varied (Yes in step S270 in FIG. 8), the first controller 111 advances the processing to step S280 and generates transmission command values Cs corresponding to the varied control cycle Ta. In the present embodiment, the first controller 111 stores the previous transmission times of the transmission command values Cs into the memory 120. The first controller 111 calculates scheduled transmission times based on the previous transmission times and the interval at which the first signals are obtained. A scheduled transmission time is a time at which the transmission command value Cs is transmitted to the actuator after the previous transmission time. The first controller 111 interpolates a transmission command value Csn at the scheduled transmission time using the ratio of the reference command value Cr with time data before the scheduled transmission time and the reference command value with time data after the scheduled transmission time to the scheduled transmission time.

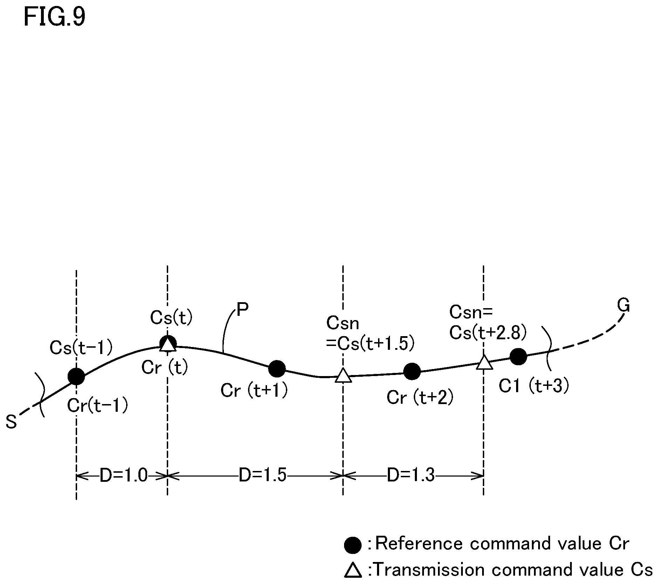

FIG. 9 is a conceptual diagram of the transmission command values Cs generated in step S270. FIG. 9 shows part of an actuator trajectory (the solid line P) from a start position S to a target position G, the reference command values Cr, the transmission command values Cs, and transmission intervals D of the transmission command values Cs. Each transmission interval D is calculated using the previous transmission time and the interval at which the first signals are obtained. A transmission interval D is also an interval between the previous transmission time and the scheduled transmission time. After reference command values Cr(t - 1), Cr(t), Cr(t + 1), Cr(t + 2), and Cr(t + 3) are each generated in a reference cycle Tr of 1.0 ms (step S100 in FIG. 3 and step S120 in FIG. 4) and transmission command values Cs(t - 1) and Cs(t) are transmitted to the corresponding actuator (steps S210 to S260), the control cycle Ta is varied (Yes in step S270) in the example shown in FIG. 9. The first controller 111 thus calculates, for example, the next scheduled transmission time (t + 1.5) using the previous transmission time (t) and the interval at which the first signals are obtained (step S280). For example, the first controller 111 identifies, on the actuator trajectory, the reference command value Cr(t + 1) with time data immediately before the scheduled transmission time (t + 1.5) and the reference command value Cr(t + 2) with time data immediately after the scheduled transmission time (t + 1.5) to linearly interpolate, based on these command values, a transmission command value Csn(Cs(t + 1.5)) at the scheduled transmission time (t + 1.5). Similarly, the first controller 111 uses the transmission time of the transmission command value Cs(t + 1.5), which is the previous transmission time, and the first signal obtained for the transmission of the transmission command value Cs(t + 1.5) to calculate a subsequent scheduled transmission time (t + 2.8). The first controller 111 identifies the reference command value Cr(t + 2) with time data immediately before the scheduled transmission time (t + 2.8) and the reference command value Cr(t + 3) with time data immediately after the scheduled transmission time (t + 2.8) to linearly interpolate, based on these command values, a transmission command value Csn(Cs(t + 2.8)) at the scheduled transmission time (t + 2.8).

Referring back to FIG. 8, the first controller 111 transmits the transmission command values Csn interpolated in step S280 to the corresponding actuator, and determines whether the actuator has reached the target position G on the actuator trajectory in step S290. When the actuator has not reached the target position G (No in step S290), the processing returns to step S270 to monitor the control cycle Ta for variation. When the actuator has reached the target position (Yes in step S290), the series of processes ends.

In this structure, the first controller 111 uses the reference command values Cr to generate, when the control cycle Ta of the corresponding actuator is varied, the position command values (transmission command values Cs) based on the varied control cycle. This reduces deviations in synchronization among the actuators 32 and 42 when some factor varies the control cycle Ta.

The first controller 111 sequentially obtains the first signals corresponding to reception of the transmission command values Cs at the actuators 32 and 42. Thus, the first controller 111 can determine the variation in the control cycle Ta using the interval at which the first signals are obtained.

### Third Embodiment

The control device 100 according to the first embodiment and the second embodiment further causes the actuators in synchronous operation to stop in response to a stop instruction provided during the synchronous operation process. The stop instruction causes all the actuators to perform an emergency stop independently of whether the hand 40 has reached the target position G. The synchronous operation performed when the stop instruction is provided will now be described.

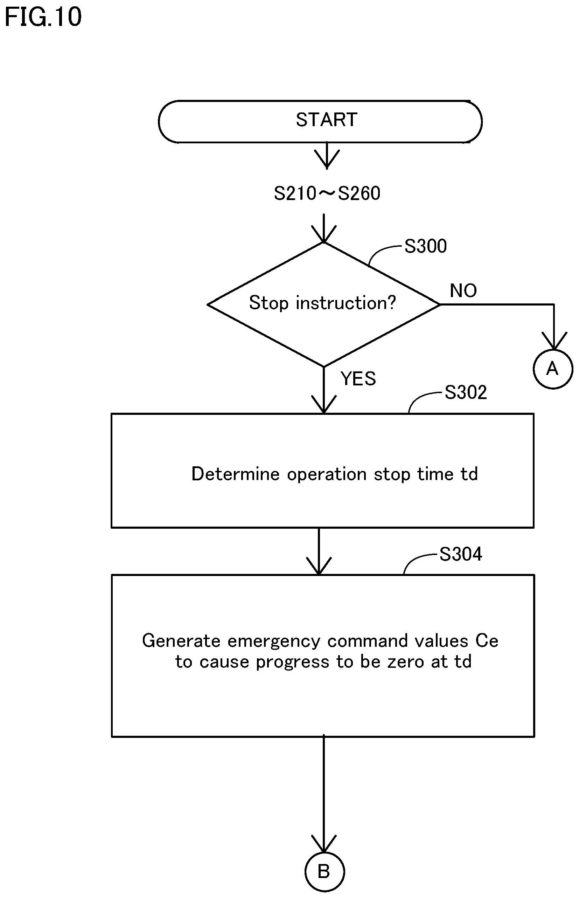

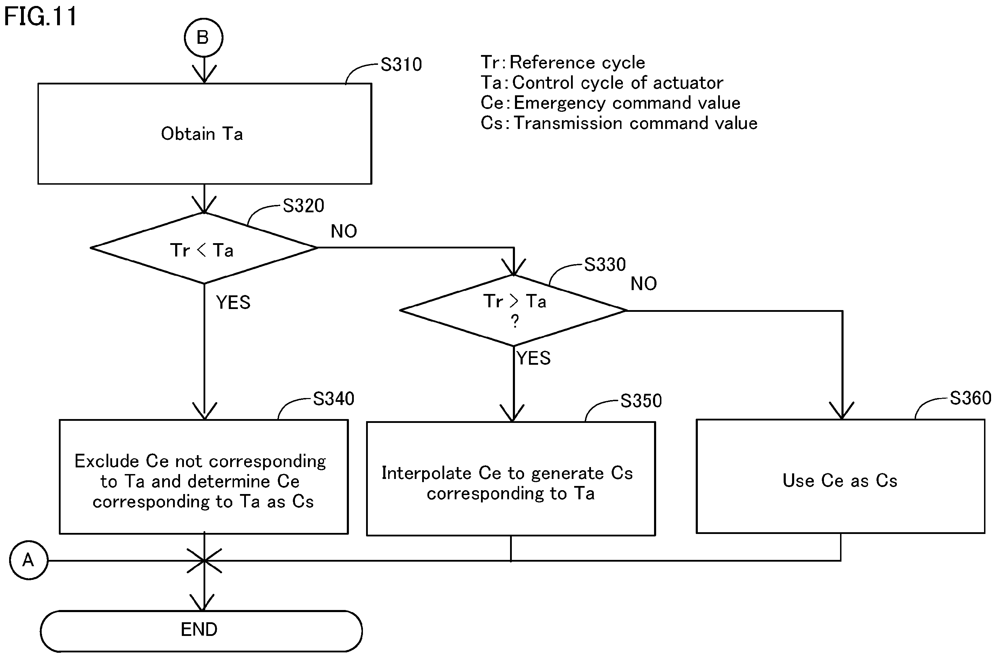

FIGs. 10 and 11 are flowcharts of the synchronous control performed when the stop instruction is provided. When obtaining the stop instruction through the input device 60 during the synchronous control (Yes in step S300), the first controller 111 refers to the memory 120 to calculate an operation stop time td using the characteristics of each actuator 32 (step S302). The operation stop time td is a stop time of an actuator that takes the longest time to stop after the stop instruction is provided when each actuator operates with its maximum deceleration. The time td may be regulated by the actuator with the lowest maximum deceleration. The first controller 111 calculates, using the maximum deceleration included in the characteristics of each actuator, a stopping time of each of the actuators 32 and 42 that is a time taken by the actuator to stop with the maximum deceleration after the time at which the stop instruction is provided. The first controller 111 uses the time at which the longest stopping time has passed after the stop instruction is provided as the operation stop time td for all the actuators, or in other words, the entire robot 20.

In step S304, the first controller 111 generates emergency command values Ce for each actuator using the operation stop time td and the reference command values Cr. The emergency command values Ce are position command values for maintaining the actuator trajectory generated in step S100 (FIGs. 3 and 4) and stopping the actuator at the time td. In step S304, the first controller 111 monotonically decreases the progress to be zero at the time td. The progress is a difference in the position command values in a period between a time t0 at which the stop instruction is provided and the operation stop time td. The progress is the amount by which an actuator progresses per unit time on the actuator trajectory and the amount of trajectory reproduced by the actuator. The degree of decrease in the progress is common to all the actuators. The monotonic decrease is in the broad sense. The emergency command values Ce are the position command values when a reproduction speed of each actuator trajectory is decreased at a deceleration achievable by all the actuators.

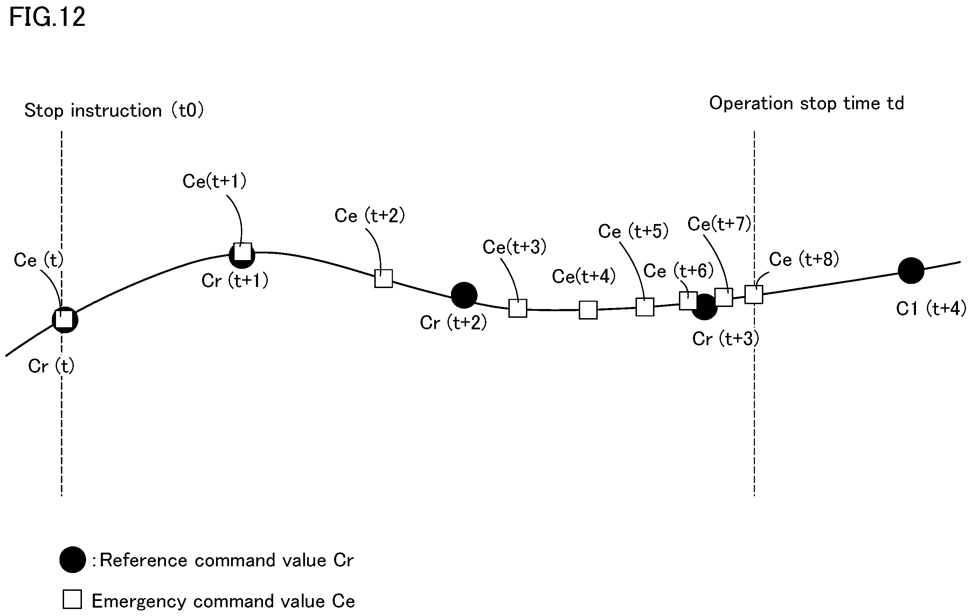

FIG. 12 is a conceptual diagram of the emergency command values Ce generated in step S304. FIG. 12 shows the solid line P, the reference command values Cr, and the emergency command values Ce. In the example shown in FIG. 12, the reference command values Cr(t), Cr(t + 1), Cr(t + 2), Cr(t + 3), and Cr(t + 4) are each generated in the reference cycle Tr of 1.0 ms (step S100 in FIG. 3 and step S120 in FIG. 4), and the emergency stop instruction is provided at the time (t) (Yes in step S300 in FIG. 9). The first controller 111 thus refers to the memory 120 to determine the operation stop time td with the maximum deceleration (step S302 in FIG. 9) using the maximum deceleration of each actuator. In FIG. 12, the operation stop time td is a time (t + 8). The first controller 111 decreases the progress in the reference command values Cr on the corresponding actuator trajectory toward the stop time td to generate the emergency command values Ce (step S304 in FIG. 10). In the example shown in FIG. 12, the progress starts to gradually decrease at the time (t + 1) and reaches zero at the time (t + 8). For example, the emergency command values Ce can be generated by applying the progress at each time to the corresponding reference command value Cr on the actuator trajectory and performing interpolation.

After generating the emergency command values Ce, the first controller 111 advances the processing to step S310 in FIG. 11 and performs the transmission command value determination for when the stop instruction is provided. The transmission command value determination shown in FIG. 11 differs from the transmission command value determination shown in FIG. 5 in that the emergency command values Ce are used in place of the reference command values Cr, with the other processing remaining the same. The processing in steps S310 to S330 corresponds to the processing in steps S210 to S360 in FIG. 5.

As described above, the transmission command values Cs for when the stop instruction is provided are determined and transmitted to the actuators 32 and 42, causing the actuators 32 and 42 to decrease the progress to stop at the time td without deviating from the actuator trajectory.

In this structure, the first controller 111 generates the emergency command values Ce for each actuator by monotonically decreasing the progress of each actuator to be zero at the operation stop time td. The first controller 111 then uses the generated emergency command values Ce to generate the transmission command values Cs. The degree of decrease in the progress is common to all the actuators 32 and 42. In this structure, all the actuators 32 and 42 can be stopped with deceleration achievable by all the actuators 32 and 42. This allows the actuators 32 and 42 to stop with appropriate deceleration while reducing deviations in synchronization among the actuators 32 and 42.

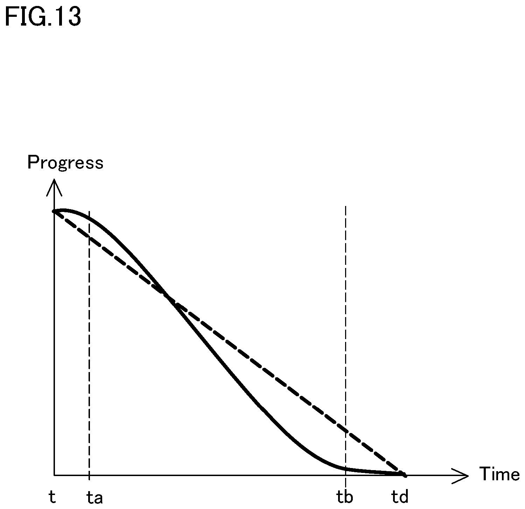

FIG. 13 is a graph showing the relationship between time and progress. FIG. 13 shows an example of decrease in the progress. The first controller 111 may linearly decrease the progress from the time t0 at which the stop instruction is provided to the operation stop time td using the relationship indicated by a straight line L1, which is the dashed line. The first controller 111 may also (i) reduce the degree of decrease in the progress from the time t0 at which the stop instruction is provided to a first time ta, (ii) increase the degree of decrease in the progress from the first time ta to a second time tb immediately before the operation stop time td, and (iii) reduce the degree of decrease in the progress again from the second time tb to the operation stop time td, using the relationship indicated by a curve L2, which is the solid line. As indicated with the curve L2, the degrees of decrease in the progress from the time t0 at which the stop instruction is provided to the first time ta immediately after the time t0 and from the second time tb immediately before the operation stop time td to the operation stop time td are less than the degree of decrease in the progress from the first time ta to the second time tb. This reduces the likelihood that the actuators rapidly decelerate immediately after the stop instruction or immediately before the stop time td. This allows the actuators 32 and 42 to stop smoothly.

### Other Embodiments

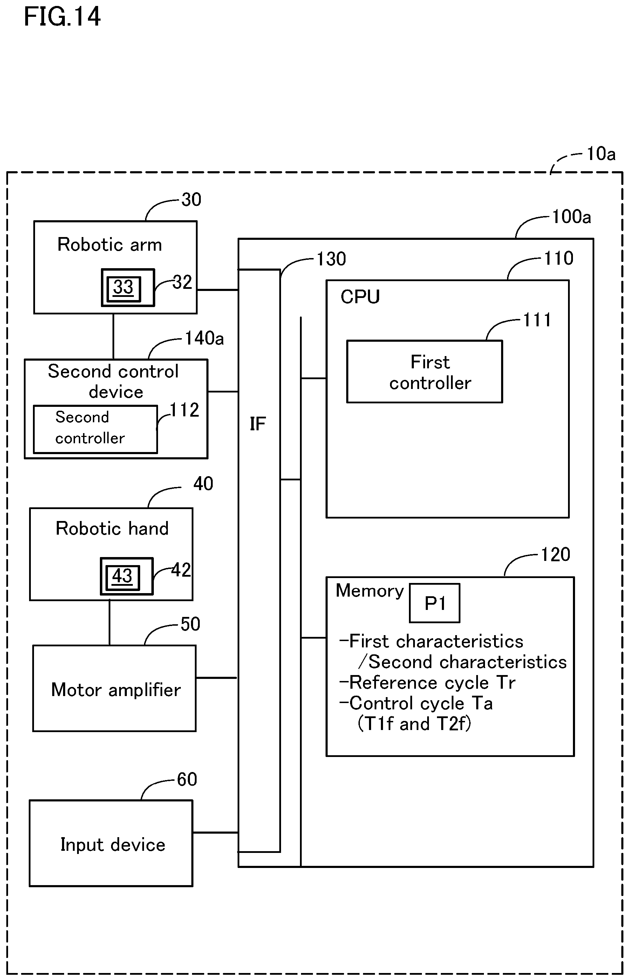

In the above embodiment, the control system 10 includes a single control device 100 including the first controller 111 that performs the synchronous control and the second controller 112 that controls the robotic arm 30. The amplifier 50 that controls the hand 40 is separate from the control device 100. In some embodiments, the structures of the control device that performs the synchronous control and the control device that drives and controls the actuators in the control system 10 may be modified in various manners. As shown in, for example, FIG. 14, a control system 10a may include a control device 100a having the function of the first controller 111 and separately include a second control device 140a having the function of the second controller 112. In some embodiments, the robotic arm 30 may have the function of the second controller 112, and the hand 40 may have the function of the amplifier 50.

The transmission command value determination in the above embodiment can also be performed when the control cycle Ta is not an integer multiple of the reference cycle Tr. When the control cycle Ta is greater than the reference cycle Tr and the control cycle Ta is not an integer multiple, such as 1.5 or 3.2 times, of the reference cycle Tr, the first controller 111 may advance the processing to step S240 (FIG. 6). In step S240, the first controller 111 may (i) exclude reference command values Cr not corresponding to the control cycle Ta, and determine reference command values Cr corresponding to the control cycle Ta as the transmission command values Cs. In addition, the first controller 111 may (ii) interpolate the position command values at the times corresponding to the control cycle Ta and at which no reference command value Cr is generated, using the reference command values Cr with time data before these times and the reference command values Cr with time data after these times, and thus generate the transmission command values Cs.

The control device 100 (the first controller 111 and the second controller 112) may extend the control cycle Ta of at least one of the actuators 32 and 42 when a predetermined condition is satisfied, such as when the load on the control device 100 exceeds a predetermined threshold. The actuator for which the control cycle Ta is extended by the control device 100 may have lower predetermined trajectory accuracy than other actuators. The first controller 111 may use the extended control cycle Ta to perform the synchronous control shown in FIG. 8. In this case, the memory 120 may store information indicating the relationship between the threshold of the load on the control device 100 and the control cycle Ta obtained through experiments or simulations as well as information about the actuator for which the control cycle Ta is extended. The first controller 111 may yield an affirmative determination result in step S270 in FIG. 8 when the load reaches the threshold. The load on the control device 100 may be the computational load on the CPU 110 or the processing load on the interface circuit 130. In this structure, the control device 100 performing the synchronous control can simultaneously perform other processes.

In the above embodiment, the first actuators 32 in the robotic arm 30 operate in the same first cycle T1f, and the second actuators 42 in the hand 40 operate in the same second cycle T2f. In some embodiments, the first actuators 32 in the robotic arm 30 may operate in different control cycles Ta, and the second actuators 42 in the hand 40 may operate in different control cycles Ta. For example, the first controller 111 can obtain the control cycle Ta of a target actuator in the robotic arm 30 and perform the transmission command value determination described above to synchronously control the entire robotic arm 30. The first actuators 32 may also have different characteristics.

In the above embodiment, the robotic arm 30 and the hand 40 are the actuators in the control system 10. In some embodiments, the actuators may be machines or mechanical elements that convert electrical signals output from a computer into physical motions. For example, the actuators can be various types of actuators such as belt conveyors and transport devices that transport the robotic arm 30.

The functions of the components described herein may be implementable with circuitry or processing circuitry including a general-purpose processor, a special-purpose processor, an integrated circuit, an application-specific integrated circuit (ASIC), a known circuit, or a combination of any of these circuits that are designed or programmed to implement the functions described herein. The processor includes a transistor or another circuit and may thus be a processing circuit or a circuit. In one or more embodiments of the present disclosure, circuitry, units, or means are hardware that implement the functions described herein or hardware programmed to implement the functions described herein. The hardware may be the hardware described herein or may be any other known hardware programmed to implement the functions described herein. When the hardware is a processor that is a type of circuitry, the circuits, means, or units are each a combination of hardware and software, and the software is included in the hardware or the processor, or both.

The present disclosure is not limited to the above embodiments and may be modified in various manners without departing from the spirit and scope of the present disclosure. For example, the present disclosure can be implemented in aspects described below. The technical features described in the above embodiments corresponding to the technical features described in the aspects described below may be appropriately replaced or combined in response to part of or all of the issues in the present disclosure or to achieve part of or all of the advantageous effects of the present disclosure. The technical features not described herein as essential may be eliminated as appropriate.
(1) A control device according to a first aspect of the present disclosure controls actuators operable in different control cycles. The control device includes a controller that synchronizes operations of the actuators. The controller generates, for each of the actuators, reference command values as an actuator trajectory of the actuator. The reference command values are information indicating position command values each for a reference cycle commonly used by the actuators. The controller determines, for each of the actuators, transmission command values using the reference command values. The transmission command values are position command values each for a control cycle of the actuator. The controller transmits the determined transmission command values to the actuator. When the control cycle of the actuator is different from the reference cycle, the controller excludes, among the reference command values, reference command values not corresponding to the control cycle and determines, among the reference command values, reference command values corresponding to the control cycle as the transmission command values.

In this structure, the transmission command values for each actuator are based on the reference command values each generated for the reference cycle commonly used by the actuators. This reduces deviations in synchronization among the actuators operating in different control cycles. When the control cycle is different from the reference cycle, the controller excludes reference command values not corresponding to the control cycle, and determines reference command values corresponding to the control cycle as the transmission command values. This allows the transmission command values to be generated efficiently. This structure in which the actuators are controlled synchronously is less likely to lower the performance of the actuators than the structure in which the transmission command values for the actuators are generated based on the greatest (longest) control cycle among the control cycles of the actuators. This structure also improves the degrees of freedom of the actuators.

In this structure, the synchronous control reduces deviations in synchronization. Deviations in synchronization include deviations in operation start timing and operation stop timing among the actuators. Deviations in synchronization may further include deviations in acceleration start timing and deceleration start timing among the actuators.

(2) In the above aspect, in generating the actuator trajectory, the controller may obtain, for each of the actuators, restrictions on the actuator including speed, acceleration, and deceleration. The controller may further generate the actuator trajectory reproducible by an actuator with strictest restrictions among the actuators.

In this structure, the controller generates the actuator trajectory based on the restrictions on each actuator including speed, acceleration, and deceleration. This reduces deviations in synchronization among the actuators with different restrictions.

(3) In the above aspect, when the control cycle of the actuator is shorter than the reference cycle, the controller may interpolate, on the actuator trajectory, between two consecutive reference command values of the reference command values to generate the transmission command values corresponding to the control cycle.

In this structure, the transmission command values are generated using the reference command values each for the reference cycle commonly used by the actuators that operate in different control cycles. This reduces deviations in synchronization among the actuators. When the control cycle is shorter than the reference cycle, the controller interpolates between two consecutive reference command values to efficiently generate transmission command values corresponding to the control cycle.

In this structure, the controller may interpolate between the two consecutive reference command values to correspond to the control cycle by generating position command values at a third time corresponding to the control cycle using the reference command values with time data before and after the third time.

(4) In the above aspect, when the control cycle is varied, the controller may generate, as the transmission command values, position command values corresponding to the varied control cycle using the reference command values.

This structure can reduce deviations in synchronization among the actuators independently of any variations in the control cycle caused by some factor.

(5) In the above aspect, the controller may obtain, for each of the actuators, first signals corresponding to reception of the transmission command values at the actuator when transmitting the transmission command values to the actuator. The controller may determine that the control cycle is varied when the first signals are obtained at an interval different from the control cycle.

This structure can easily determine whether the control cycle is varied using the interval at which the first signals are obtained.

(6) In the above aspect, the control device may further include a storage that stores a previous transmission time at which the controller has previously transmitted the transmission command values to the actuator. The controller may calculate, based on the previous transmission time stored in the storage and the interval at which the first signals are obtained, a scheduled transmission time at which a transmission command value is to be transmitted to the actuator subsequently to the previous transmission time. The controller may generate the transmission command value at the scheduled transmission time using, among the reference command values, a reference command value with time data before the scheduled transmission time and a reference command value with time data after the scheduled transmission time.

In this structure, the controller calculates the subsequent scheduled transmission time based on the previous transmission time and the interval at which the first signals are obtained to generate (interpolate) the position command value at the scheduled transmission time using the reference command values before and after the scheduled transmission time. This structure can thus reduce deviations in synchronization among the actuators independently of any dynamic variations in the control cycle.

(7) In the above aspect, the controller may obtain a load applied on the control device through processing performed by the control device. The controller may extend the control cycle of at least one of the actuators when the load is greater than or equal to a predetermined threshold.

In this structure, the control device can perform other processing as appropriate while reducing deviations in synchronization among the actuators.

(8) In the above aspect, when obtaining a stop instruction for the actuators, the controller may calculate, for each of the actuators, a stopping time of the actuator using a maximum deceleration of the actuator. The stopping time is a time taken by the actuator to stop with the maximum deceleration from when the controller obtains the stop instruction. The controller may determine a longest stopping time of stopping times of the actuators as an operation stop time at which the actuators stop operations. The controller may generate as position command values from when the stop instruction is obtained to the operation stop time, emergency command values in which progress of each of the actuators included in the reference command values is monotonically decreased to be zero at the operation stop time. The controller may determine the transmission command values using the emergency command values.

In this structure, the actuators can be stopped with deceleration achievable by all the actuators. The controller generates, as the transmission command values, the position command values for each actuator by monotonically decreasing the progress of each actuator to be zero at the operation stop time. The degree of decrease in the progress is common to all the actuators. This reduces deviations in synchronization among the actuators and allows the actuators to appropriately decelerate and stop.

(9) In the above aspect, the controller may reduce a degree of decrease in the progress from when the stop instruction is obtained to a first time and a degree of decrease in the progress from a second time to the operation stop time to be less than a degree of decrease in the progress from the first time to the second time. The second time is after the first time and before the operation stop time.

This structure reduces the likelihood that the actuators rapidly decelerate immediately after the stop instruction or immediately before the operation stop time. This allows the actuators to stop smoothly.

(10) A control system according to a second aspect of the present disclosure includes actuators operable in different control cycles and a control device that controls operations of the actuators. The control device includes a controller that synchronizes the operations of the actuators. The controller generates, for each of the actuators, reference command values as an actuator trajectory of the actuator. The reference command values are information indicating position command values each for a predetermined reference cycle used commonly by the actuators. The controller determines transmission command values using the reference command values. The transmission command values are position command values each for the control cycle of the actuator. The controller transmits the determined transmission command values to the actuator. When the control cycle of the actuator is different from the reference cycle, the controller excludes, among the reference command values, reference command values not corresponding to the control cycle and determines, among the reference command values, reference command values corresponding to the control cycle as the transmission command values.

(11) In the above aspect, the actuators may include a robotic arm and a robotic hand attached to the robotic arm.

This structure can reduce deviations in synchronization between the robotic arm and the robotic hand.

(12) A control method according to a third aspect of the present disclosure is a control method for synchronizing operations of actuators operable in different control cycles. The method includes generating, for each of the actuators, reference command values as an actuator trajectory of the actuator. The reference command values are information indicating position command values each for a predetermined reference cycle used commonly by the actuators. The method includes determining, for each of the actuators, transmission command values using the reference command values. The transmission command values are position command values each for the control cycle of the actuator. The method includes transmitting, for each of the actuators, the determined transmission command values to the actuator. When the control cycle of the actuator is different from the reference cycle, the determining the transmission command values includes excluding, among the reference command values, reference command values not corresponding to the control cycle and determining, among the reference command values, reference command values corresponding to the control cycle as the transmission command values.

(13) A program according to a fourth aspect of the present disclosure causes operations of actuators operable in different control cycles to synchronize with one another. The program causes a computer to generate, for each of the actuators, reference command values as an actuator trajectory of the actuators. The reference command values are information indicating position command values each for a predetermined reference cycle commonly used by the actuators. The program causes the computer to determine, for each of the actuators, transmission command values using the reference command values. The transmission command values are position command values each for the control cycle of the actuator. The program causes the computer to transmit the determined transmission command values to the actuator. When the control cycle of the actuator is different from the reference cycle, the program further causes the computer to exclude, among the reference command values, reference command values not corresponding to the control cycle and determine, among the reference command values, reference command values corresponding to the control cycle as the transmission command values.

The present disclosure may be implemented in various other manners. For example, the present disclosure can be implemented in a non-transitory storage medium storing a computer program for implementing the function of at least one of the control device 100, the first controller 111, or the second controller 112.

### DESCRIPTION OF THE REFERENCE NUMERALS

10, 10a: control system, 20: robot, 30: robotic arm, 31: arm end, 32: first actuator, 33: first motor, 40: hand, 41: end, 42: second actuator, 43: second motor, 50: amplifier, 60: input device, 100: control device, 100a: control device, 110: CPU, 111: first controller, 112: second controller, 120: memory, 130: interface circuit, 140a: second control device, 201: container, 202: container, L: link, P1: program, P2: program, Ce: emergency command value, Cr: reference command value, Cs: transmission command value, Csn: transmission command value at scheduled transmission time, S: start position, G: target position, P: actuator trajectory, D: transmission interval, T1f: first cycle, T2f: second cycle, Ta: control cycle, Tr: reference cycle, L1: straight line indicating relationship between progress and time, L2: curve indicating relationship between progress and time, W: workpiece, t0: stop instruction time, ta: first time, tb: second time, td: operation stop time

## Claims

1. A control device for controlling actuators operable in different control cycles, the control device comprising:
a controller configured to synchronize operations of the actuators, the controller being configured to, for each of the actuators,
generate reference command values as an actuator trajectory of the actuator, the reference command values being information indicating position command values each for a predetermined reference cycle commonly used by the actuators,
determine transmission command values using the reference command values, the transmission command values being position command values each for a control cycle of the actuator, and
transmit the determined transmission command values to the actuator,
wherein when the control cycle of the actuator is different from the reference cycle, the controller excludes, among the reference command values, reference command values not corresponding to the control cycle and determines, among the reference command values, reference command values corresponding to the control cycle as the transmission command values.

2. The control device according to claim 1, wherein in generating the actuator trajectory, the controller
obtains, for each of the actuators, restrictions on the actuator including speed, acceleration, and deceleration, and
generates the actuator trajectory reproducible by an actuator with strictest restrictions among the actuators.

3. The control device according to claim 1, wherein
when the control cycle of the actuator is shorter than the reference cycle, the controller interpolates, on the actuator trajectory, between two consecutive reference command values of the reference command values to generate the transmission command values each corresponding to the control cycle.

4. The control device according to claim 1, wherein
when the control cycle is varied, the controller generates, as the transmission command values, position command values corresponding to the varied control cycle using the reference command values.

5. The control device according to claim 4, wherein
for each of the actuators, the controller
obtains, when transmitting the transmission command values to the actuator, first signals corresponding to reception of the transmission command values at the actuator, and
determines that the control cycle is varied when the first signals are obtained at an interval different from the control cycle.

6. The control device according to claim 5, further comprising:
a storage configured to store a previous transmission time at which the controller has previously transmitted the transmission command values to the actuator,
wherein the controller
calculates, based on the previous transmission time stored in the storage and the interval at which the first signals are obtained, a scheduled transmission time at which a transmission command value is to be transmitted to the actuator subsequently to the previous transmission time, and
generates the transmission command value at the scheduled transmission time using, among the reference command values, a reference command value with time data before the scheduled transmission time and a reference command value with time data after the scheduled transmission time.

7. The control device according to claim 3, wherein
the controller
obtains a load applied on the control device through processing performed by the control device, and
extends the control cycle of at least one of the actuators when the load is greater than or equal to a predetermined threshold.

8. The control device according to claim 1, wherein
when obtaining a stop instruction for the actuators, the controller
calculates, for each of the actuators, a stopping time of the actuator using a maximum deceleration of the actuator, the stopping time being a time taken by the actuator to stop with the maximum deceleration from when the controller obtains the stop instruction,
determines a longest stopping time of stopping times of the actuators as an operation stop time at which the actuators stop operations,
generates, as position command values from when the stop instruction is obtained to the operation stop time, emergency command values in which progress of each of the actuators included in the reference command values is monotonically decreased to be zero at the operation stop time, and
determines the transmission command values using the emergency command values.

9. The control device according to claim 8, wherein
the controller reduces a degree of decrease in the progress from when the stop instruction is obtained to a first time and a degree of decrease in the progress from a second time to the operation stop time to be less than a degree of decrease in the progress from the first time to the second time, and the second time is after the first time and before the operation stop time.

10. A control system, comprising:
actuators operable in different control cycles; and
a control device configured to control operations of the actuators, the control device including a controller configured to synchronize the operations of the actuators, the controller being configured to, for each of the actuators,
generate reference command values as an actuator trajectory of the actuator, the reference command values being information indicating position command values each for a predetermined reference cycle used commonly by the actuators,
determine transmission command values using the reference command values, the transmission command values being position command values each for the control cycle of the actuator, and
transmit the determined transmission command values to the actuator,
wherein when the control cycle of the actuator is different from the reference cycle, the controller excludes, among the reference command values, reference command values not corresponding to the control cycle and determines, among the reference command values, reference command values corresponding to the control cycle as the transmission command values.

11. The control system according to claim 10, wherein
the actuators include a robotic arm and a robotic hand attached to the robotic arm.

12. A control method for synchronizing operations of actuators operable in different control cycles, the method comprising, for each of the actuators:
generating reference command values as an actuator trajectory of the actuator, the reference command values being information indicating position command values each for a predetermined reference cycle used commonly by the actuators;
determining transmission command values using the reference command values, the transmission command values being position command values each for the control cycle of the actuator; and
transmitting the determined transmission command values to the actuator;
wherein when the control cycle of the actuator is different from the reference cycle, the determining the transmission command values includes excluding, among the reference command values, reference command values not corresponding to the control cycle and determining, among the reference command values, reference command values corresponding to the control cycle as the transmission command values.
